**Europäisches Patentamt**

**European Patent Office**

**Office européen des brevets**

(11) Veröffentlichungsnummer: **0 129 794**
**B1**

# (12) EUROPÄISCHE PATENTSCHRIFT

(45) Veröffentlichungstag der Patentschrift:
03.02.88

(51) Int. Cl.⁴: **H 04 B 1/20**

(21) Anmeldenummer: **84106852.1**

(22) Anmeldetag: **15.06.84**

(54) **Fernbedienungssystem für elektrische und elektronische Geräte, insbesondere für Geräte der Unterhaltungselektronik.**

(30) Priorität: **24.06.83 DE 3322729**

(43) Veröffentlichungstag der Anmeldung:
**02.01.85 Patentblatt 85/1**

(45) Bekanntmachung des Hinweises auf die Patenterteilung:
**03.02.88 Patentblatt 88/5**

(84) Benannte Vertragsstaaten:
**AT BE CH DE FR GB IT LI LU NL SE**

(56) Entgegenhaltungen:
**EP-A-0 075 317**
**DE-A-2 542 021**
**GB-A-2 005 114**

(73) Patentinhaber: **TELEFUNKEN Fernseh und Rundfunk GmbH, Göttinger Chaussee 76, D-3000 Hannover 91 (DE)**

(72) Erfinder: **Platte, Hans-Joachim, Dr.-Ing., Königsberger Weg 22, D-3005 Hemmingen 4 (DE)**
Erfinder: **Oberjatzas, Günter, Dipl.-Ing., Gollstrasse 64, D-3000 Hannover 73 (DE)**
Erfinder: **Voessing, Walter, Dipl.-Ing., AmWeingarten 14, D-3015 Wennigsen 1 (DE)**

(74) Vertreter: **Einsel, Robert, Dipl.-Ing., TELEFUNKEN Fernseh und Rundfunk GmbH Göttinger Chaussee 76, D-3000 Hannover 91 (DE)**

LIBER, STOCKHOLM 1988

**Beschreibung**

Es ist bekannt, elektrische Geräte wie z. B. Hörrundfunkempfänger, Fernsehempfänger und Videorecorder mit einer drahtlos sendenden Fernbedieneinheit zu steuern. Die Fernbedieneinheit enthält dazu z. B. einen gerichtet strahlenden Infrarot- oder Ultraschallsender, der entsprechend den einzelnen Funktionen codierte Signale an einen im Gerät befindlichen Infrarot- oder Ultraschallempfänger sendet. Auf diese Weise können verschiedene Funktionen des Gerätes wie Ein- und Ausschaltung, Kanalwahl, Lautstärke, Helligkeit und Bandlauffunktionen eines Videorecorders ferngesteuert werden.

Derartige Fernbedieneinheiten erfordern von dem Bedienenden eine gewisse Geschicklichkeit Eingewöhnung. Insbesondere bei ungeübten Benutzern muß ein Tastendruck oft mehrfach wiederholt werden, bis das zu steuernde Gerät entsprechend reagiert. Der Hauptgrund hierfür ist, daß die Fernbedieneinheit wegen der Richtcharakteristik der Infrarot- oder Ultraschallsender und -empfänger in der richtigen Lage und Richtung zum zu steuernden Gerät gehalten werden muß. Der Bedienende kann hierbei nicht ohne weiteres erkennen, ob der in die Fernbedieneinheit eingegangene Befehl das Gerät überhaupt erreichen kann, insbesondere, wenn eine den Befehlsempfang quittierende Anzeige am Gerät nicht vorhanden oder aus der Entfernung vom Benutzer schlecht erkennbar ist. Der Benutzer ist daher praktisch gezwungen, sich vor jeder Benutzung der Fernbedieneinheit auf seine bisherigen Erfahrungen mit der Fernbedienung zu besinnen und daran zu prüfen, ob von seinem jeweiligen Standort bei der jeweiligen Ausrichtung der Fernbedieneinheit zum zu steuernden Gerät in der jeweiligen Umgebung und beim jeweiligen Batteriezustand eine Benutzung der Fernbedienung überhaupt sinnvoll ist. Darüber hinaus muß er nach jeder Betätigung eines Fernbedienungselements der Fernbedieneinheit prüfen, ob die gewünschte Reaktion am zu stuernden Gerät wirklich erfolgt. Ist dies nicht der Fall, muß er den beschriebenen Vorgang mit anderem Standort oder anderer Ausrichtung oder mit geringerer Entfernung zum Gerät wiederholen.

Der Erfindung liegt die Aufgabe zugrunde, die Handhabung einer derartigen Fernbedieneinheit in dem Sinne zu vereinfachen, daß der Bedienende die Funktionsfähigkeit der Fernbedienung besser erkennen kann.

Diese Aufgabe wird durch die im Anspruch 1 beschriebene Erfindung gelöst. Vorteilhafte Weiterbildungen der Erfindung sind in den Unteransprüchen beschrieben.

Es ist zwar ein drahtloses Fernbedienungssystem bekannt (EP-A2-0 075 317), bei dem von einem durch die Fernbedieneinheit gesteuerten Gerät zu der Fernbedieneinheit ein den Empfang bestätigendes Signal rückübertragen wird. Dieses Signal dient jedoch in der Fernbedieneinheit nicht dazu, diese nur bei Kommunikationsfähigkeit der Fernbedieneinheit mit dem zu steuernden Gerät einzuschalten und dieses dem Benutzer an der Fernbedieneinheit kenntlich zu machen.

Es ist auch bekannt (GB-A-2 005 114), den Betriebszustand eines Gerätes in einer Basisstation zusammen mit einem Audiosignal in Form eines speziellen Burstsignals einer die Basisstation bedienenden Fernbedienungs-Station zu melden. Dabei handelt es sich jedoch nicht um ein Fernbedienungssystem, von dem die vorliegende Erfindung ausgeht. Eine selbsttätige Einschaltung einer Fernbedieneinheit durch ein gesteuertes Gerät im Falle der Kommunikationsfähigkeit ist auch dort nicht vorgesehen.

Bei der Erfindung wird der Bedienende an der Fernbedieneinheit selbst, d.h. in seiner unmittelbaren Nähe, darüber informiert, ob er mit der Fernbedieneinheit das zu steuernde Gerät überhaupt bedienen kann oder welches Gerät aus einer Vielzahl von mit der Fernbedieneinheit bedienbaren Geräten jeweils bedient werden kann. Die Fernbedieneinheit wird erst durch ein in regelmäßigen Zeitintervallen vom Gerät empfangenes Signal ("Bereitschaftssignal") aktiviert und ist ohne ein derartiges Signal nicht funktionsfähig. Der Bedienende erkennt also an einer fehlenden Anzeige oder auch an einer ausdrücklichen Anzeige, z. B. "nicht funktionsfähig", daß momentan eine Fernbedienung eines zugeordneten Gerätes nicht möglich ist. Das kann der Fall sein wenn die Fernbedieneinheit nicht auf ein Gerät ausgerichtet, das Gerät oder die Fernbedieneinheit defekt oder das Gerät ganz ausgeschaltet ist und deshalb nicht auf Fernsteuersignale reagieren kann.

Bei einer Vielzahl von Geräten, die mit derselben Fernbedieneinheit bedient werden können, senden die Sender der einzelnen Geräte vorzugsweise unterschiedlich codierte Bereitschaftssignale. An der Fernbedieneinheit kann dann angezeigt werden, welches Gerät, z. B. "Videorecorder" momentan bedient werden kann. Der im Gerät vorgesehene Sender sendet bei Funktionsbereitschaft des Gerätes in periodischer Wiederholung ein Fernsteuersignal, aus dem der in der Fernbedieneinheit enthaltene Empfänger die Funktionsbereitschaft des zu steuernden Gerätes erkennt. Nur wenn dieses Bereitschaftssignal des zu steuernden Gerätes in der Fernbedieneinheit empfangen wird, geht die Fernbedieneinheit selbst in Funktionsbereitschaft. Nur dann werden Betätigungen von Bedienungselementen der Fernbedieneinheit in entsprechend befehlscodierte Fernsteuersignale umgesetzt.

Die erfindungsgemäße Lösung, die jeweilige Existenz des Übertragungskanals von der Fernbedieneinheit zum Gerät automatisch an der Existenz des Kanals in umgekehrter Richtung vom

Gerät zur Fernbedieneinheit zu testen, funktioniert besonders gut, wenn die Richtcharakteristik aller Sendeteile gleich ist und die Richtcharakteristik aller Empfangsteile ebenfalls gleich ist. Die Sendeleistung des Senders im Gerät kann in vorteilhafter Weise proportional zur jeweiligen Sendeleistung der Fernbedieneinheit, die von dem Zustand der Batterie abhängig ist, gesteuert werden. Zu diesem Zweck kann ein die Sendeleistung der Fernbedieneinheit anzeigendes, codiertes Signal von der Fernbedieneinheit zum Gerät gesendet werden, das die Sendeleistung des Senders im Gerät proportional zur jeweiligen Sendeleistung der Fernbedieneinheit steuert.

Die Erfindung wird anhand der Zeichnung am Beispiel der Fernbedienung eines Videorecorders erläutert.

Darin zeigen

Fig. 1 das Zusammenwirken zwischen der Fernbedieneinheit und einem Gerät in Funktionsbereitschaft,

Fig. 2 die Fernbedieneinheit ohne Funktionsbereitschaft,

Fig. 3 ein Prinzipschaltbild für die Fernbedieneinheit mit Empfang und Auswertung eines vom Gerät gesendeten Funktionsbereitschaftssignals und

Fig. 4 ein Prinzipschaltbild des im Gerät vorgesehenen Senders.

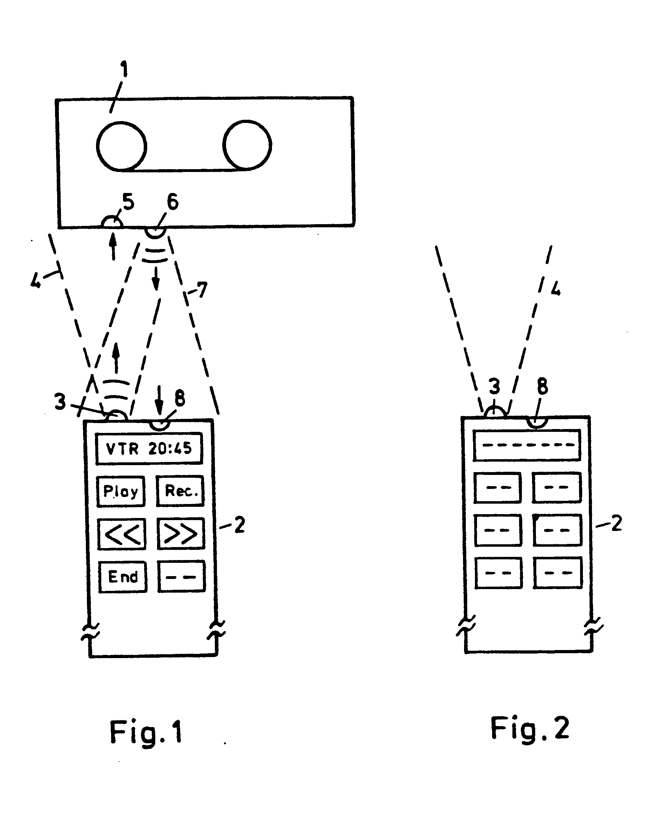

In Fig. 1 ist der Videorecorder 1 mit der Fernbedieneinheit 2 in seinen verschiedenen Funktionen fernsteuerbar. Die Fernbedieneinheit 2 enthält dazu einen Infrarot-Sender 3, der mit der Richtcharakteristik 4 codierte Signale an den Infrarot-Empfänger 5 im Recorder 1 sendet. Der Recorder 1 enthält außerdem einen Sender 6, der mit der Richtcharakteristik 7 ein Funktionsbereitschaftssignal an den Empfänger 8 in der Fernbedieneinheit 2 sendet. Nur bei Empfang dieses Funktionsbereitschaftssignals von dem Sender 6 wird die Fernbedieneinheit 2 aktiviert. Es wird dann auf elektronischen Anzeigeeinheiten angezeigt, daß mit der Fernbedieneinheit 2 der Videorecorder VTR bedient werden kann.

Gleichzeitig erfolgt eine Beschriftung der einzelnen Tasten mit den für einen Videorecorder typischen Bedienungsfunktionen. Eine derartige Lösung ist näher beschrieben in der älteren Patentanmeldung DE-A-33 10 580.4. Der Videorecorder 1 kann jetzt durch die einzelnen Tasten der Fernbedieneinheit 2 bedient werden.

In Fig. 2 liegt der Empfänger 8 außerhalb der Richtcharakteristik 7 des Senders 6 im fernzubedienenden Gerät 1. Damit ist auch der Empfänger 5 außerhalb der Reichweite des Senders 3, so daß Fernsteuersignale von der Fernbedieneinheit 2 aus physikalischen Gründen das fernzubedienende Gerät 1 nicht erreichen können. Die Fernbedieneinheit ist jetzt nicht funktionsfähig. Auf den Feldern der Fernbedieneinheit 2 erfolgt keine Anzeige, woraus der Bedienende die Funktionsunfähigkeit erkennt. Es kann auch eine ausdrückliche Anzeige, z. B. "nicht funktionsfähig" erfolgen. Die gleichen Verhältnisse liegen an der Fernbedieneinheit vor, wenn die Fernbedieneinheit 2 zwar wie in Fig. 1 auf das Gerät 1 ausgerichtet ist, das Gerät 1 jedoch nicht eingeschaltet ist oder ein sonstiger Fehler vorliegt, der das regelmäßige Aussenden des Funktionsbereitschaftssignals durch Sender 6 verhindert.

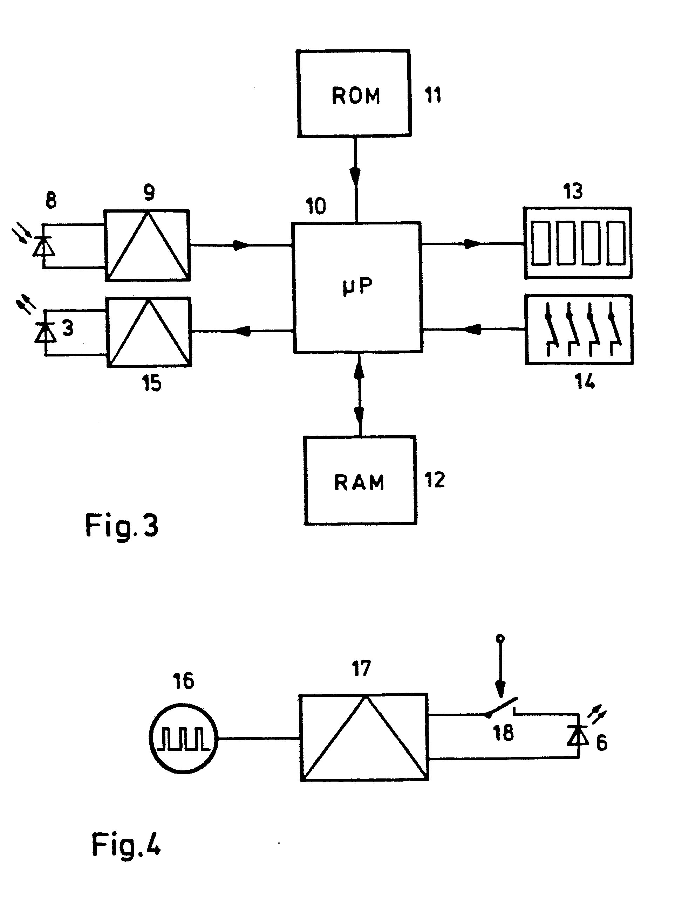

Fig. 3 zeigt im Prinzip den Aufbau der Schaltung in der Fernbedieneinheit 2. Das Funktionsbereitschaftssignal von einem Gerät wird mit dem Empfänger 8 in Form einer Infrarot-Empfangsdiode empfangen und über den Demodulator 9 dem Mikroprozessor 10 zugeführt, an den ein ROM-Speicher 11 und ein RAM-Speicher 12 angeschlossen sind. An den Mikroprozessor 10 sind außerdem das Tastenbeschriftungsfeld 13 und das für die manuelle Bedienung vorgesehene Tastenfeld 14 angeschlossen. Der Mikroprozessor 10 gibt entsprechend der Befehleingabe in das Tastenfeld 14 ein Signal an den Modulator 15, der über den Sender 3 in Form einer Infrarot-Sendediode das codierte Fernbedienungssignal an das Gerät 1 sendet. Die gesamte Schaltung ist nur funktionsfähig, wenn mit dem Empfänger 8 ein Funktionsbereitschaftssignal von einem Gerät empfangen wird. In dem Tastenbeschriftungsfeld 13 wird dann u.a. angezeigt, von welchem Gerät jeweils das Funktionsbereitschaftssignal empfangen wird.

Fig. 4 zeigt im Prinzip den Aufbau des Senders 6 zur Erzeugung des Funktionsbereitschaftssignals. Der Generator 16 für den Zeittakt der periodischen Wiederholung steuert den Modulator 17, der das Funktionsbereitschaftssignal über den Sender 6 in Form einer Infrarot-Sendediode ausstrahlt. Bei Funktionsbereitschaft des Gerätes wird der Schalter 18 durchgeschaltet.

Die Fernbedieneinheit 2 wird mit einer Batterie oder einem Akku betrieben, da ein Anschluß einer solchen Fernbedieneinheit an das Stromnetz nicht praktikabel ist. Zur Schonung der Batterie oder des Akkus erfolgt vorzugsweise die Prüfung des Empfangs der Bereitschaftssignale von den Geräten 1 nicht ständig, sondern wird erst vom Benutzer durch das Einschalten der Fernbedieneinheit oder durch Betätigung eines speziellen Bedienungselementes an der Fernbedieneinheit ausgelöst. An der Fernbedieneinheit kann eine Sensortaste angeordnet sein, die beim Ergreifen der Fernbedieneinheit 2 zwangsläufig berührt wird und die Fernbedieneinheit 2 auf die Prüfung des Empfangs der Bereitschaftssignale einschaltet. Es können auch mehrere oder großflächige Sensorelemente vorgesehen sein, damit beim Erfassen der Fernbedieneinheit 2 durch die menschliche Hand die genannte Einschaltung mit Sicherheit erfolgt.

**Patentansprüche**

1. Fernbedienungssystem für elektrische und elektronische Geräte (1), insbesondere für Geräte der Unterhaltungselektronik, bei dem die Fernbedieneinheit (2) einen Befehlssender (3) und das Gerät (1) einen Befehlsempfänger (5) und zusätzlich das Gerät (1) einen zweiten Sender (6) und die Fernbedienheit (2) einen diesem zugeordneten zweiten Empfänger (8) aufweist, dadurch gekennzeichnet, daß an den Steuereingang des zweiten Senders (6) ein das Gerät (1) kennzeichnendes Bereitschaftssignal angelegt und an den zweiten Empfänger (8) eine Schaltung angeschlossen ist, die nur bei Empfang des Bereitschaftssignals die Fernbedieneinheit (2) für die Steuerung des Gerätes (1) einschaltet, daß in der Fernbedieneinheit (2) eine Anzeige (VTR) für die erfolgte Einschaltung der Fernbedieneinheit (2) ausgelöst wird und daß der zweite Sender (6) und der zweite Empfänger (8) in ihrer Richtcharakteristik und ihrer Einbaulage so auf den Befehlssender (3) und den Befehlsempfänger (5) abgestimmt sind, daß mit weitgehend beliebiger räumlicher Relation von Gerät (1) und Fernbedieneinheit (2) bei Empfang von Signalen des zweiten Senders (6) im zweiten Empfänger (8) Signale des Befehlssenders (3) vom Befehlsempfänger (5) empfangen werden können.

2. System nach Anspruch 1, dadurch gekennzeichnet, daß die Anzeige eine Kennzeichnung (VTR) des die Einschaltung aus Lösenden Gerätes (1) enthält.

3. System nach Anspruch 1, dadurch gekennzeichnet, daß der zweite Sender (6) nur dann das Bereitschaftssignal sendet, wenn das Gerät (1) funktionsfähig und nicht durch priorisierte Bedienung von einer anderen Fernbedieneinheit gegen eine Bedienung durch die Fernbedieneinheit (2) gesperrt ist.

4. System nach Anspruch 1, dadurch gekennzeichnet, daß in der Fernbedieneinheit (2) dann, wenn kein Bereitschaftssignal von dem zweiten Sender (6) des Gerätes (1) empfangen wird, eine Anzeige für die momentane Funktionsunfähigkeit der Fernbedieneinheit (2) hinsichtlich des Gerätes (1) erfolgt.

5. System nach Anspruch 1, dadurch gekennzeichnet, daß die Richtcharakteristiken des Befehlssenders (3) und des zweiten Senders (6) und die Richtcharakteristiken des Befehlsempfängers (5) und des zweiten Empfängers (8) untereinander gleich sind.

6. System nach Anspruch 1, dadurch gekennzeichntet, daß die Sendeleistung des zweiten Senders (6) proportional zur Sendeleistung des Befehlssenders (3) gesteuert wird.

7. System nach Anspruch 1, dadurch gekennzeichnet, daß der zweite Sender (6) nur in periodisch wiederkehrenden Zeitabschnitten das Bereitsschaftssignal sendet.

8. System nach Anspruch 1, dadurch gekennzeichnet, daß bei einer Vielzahl von der Fernbedieneinheit (2) zugeordneten Geräten (1) die zweiten Sender (6) der Geräte (1) unterschiedlich codierte Berietschaftssignale senden.

9. System nach Anspruch 1, dadurch gekennzeichnet, daß die Prüfung des Empfanges der Bereitschaftssignale nich ständig erfolgt, sondern vom Benutzer durch das Einschalten der Fernbedieneinheit (2) oder durch Betätiger eines Bedienungselements an der Fernbedieneinheit (2) ausgelöst wird.

**Claims**

1. A remote control system for electrical and electronic equipment (1), more particularly for electronic equipment for entertainment, in which the remote control unit (2) has an instruction transmitter (3) and the equipment (1) has an instruction receiver (5) and in addition the equipment (1) has a second transmitter (6) and the remote control unit (2) has a second receiver (8) associated therewith, characterised in that a stand-by signal identifying the equipment (1) is applied to the control input of the second transmitter (6) and a circuit connected to the second receiver (8), said circuit switching on the remote control unit (2) for controlling the equipment (1) only when the stand-by signal is received, that an indication (VTR) for the resulting switch on of the remote control unit (2) is triggered in the remote control unit (2) and that the second transmitter (6) and the second receiver (8) are so adapted in their direction characteristics and position to the instruction transmitter (3) and the instruction receiver (5), that largely regardless of the spatial relationships between the equipment (1) and the remote control unit (2) signals from the instruction transmitter (3) may be received by the instruction receiver (5) on receipt of signals from the second transmitter (6) in the second receiver (8).

2. A system according to claim 1, characterised in that the indication includes an identification (VTR) of the equipment (1) which triggers switch on.

3. A system according to claim 1 charcterised in that the second transmitter (6) only sends the stand-by signal, if the equipment (1) is operational and has not been blocked from operation by the remote control unit (2) due to its priority use by some other remote control unit.

4. A system according to claim 1, characterised in that if no stand-by signal is received from the second transmitter (6) of the equipment (1), then in the remote control unit (2) there results an indication for the momentary incapacity of the remote control unit (2) with regard to the equipment (1).

5. A system according to claim 1, characterised in that the direction characteristics of the instruction transmitter (3) and of the second transmitter (6) and the direction characteristics of the instruction receiver (5) and the second receiver (8) are the same.

6. A system according to claim 1, <u>characterised in that</u> the transmission power of the second transmitter (6) is controlled so as to be proportional to the transmission power of the instruction transmitter (3).

7. A system according to claim 1 <u>characterised in that</u> the second transmitter (6) sends the stand-by signal only at periodically repeated time intervals.

8. A system according to claim 1, <u>characterised in that</u> in plurality of pieces of equipment (1) associated with the remote control unit (2) the second transmitters (6) of the equipment (1) transmit different coded stand-by signals.

9. A system according to claim 1, <u>characterised in that</u> the checking of the reception of the stand-by signals is not continuous but is triggered by the user by switching on the remote control unit (2) or by actuating an operating element on the remote control unit (2).

**Revendications**

1. Système de télécommande pour appareils électriques et électroniques (1), destiné particullèrement aux apparells de l'électronique de loisir, dans lequel le boîtier de télécommande (2) comporte un émetteur d'ordres (3) et l'appareil (1) comporte un second émetteur (6) et le boîtier de télécommande (2) un second récepteur (8) associé à cet émetteur, caractérisé par le fait qu'un signal "prêt à fonctionner" caractérisant l'appareil (1) est appliqué à l'entrée de la commande du second émetteur (6) et qu'un circuit est raccordé au second récepteur (8), ce circuit mettant en service le boîtier de télécommande (5) seulement à la réception du signal "prêt à fonctionner", pour commander l'appareil (1), que dans le boîtier de télécommande (2), un affichage (VTR) est provoqué, signifiant que la mise en service du boîtier de télécommande (2) a eu lieu, et que le diagramme de rayonnement et la disposition du second émetteur (6) et du second récepteur (8) sont choisis en fonction de l'émetteur d'ordres (3) et du récepteur d'ordres (5), de telle sorte que lors de la réception de signaux du second émetteur (6) dans le second récepteur (8), des signaux de l'émetteur d'ordres (3) peuvent être reçus par le récepteur d'ordres (5) pratiquement quelle que soit la relation spatiale entre l'appareil (1) et le boîtier de télécommande (2).

2. Système selon la revendication 1, caractérisé par le fait que l'affichage contient une caractéristique (VTR) de l'appareil (1) qui déclenche la mise en circuit.

3. Système selon la revendication 1, caractérisé par le fait que le second émetteur (6) n'émet le signal "prêt à fonctionner" que si l'appareil (1) est en mesure de fonctionner et non bloqué par l'utilisation prioritaire d'un autre boîtier de télécommande interdisant une manipulation du boîtier de télécommande (2).

4. Système selon la revendication 1, caractérisé par le fait que sur le boîtier de télécommande (2) apparaît, en l'absence d'un signal "prêt à fonctionner" en provenance du second émetteur (6) de l'appareil (1), un affichage du non-fonctionnement momentané du boîtier de télécommande (2) vis-à-vis de l'appareil (1).

5. Système selon la revendication 1, caractérisé par le fait que les diagrammes de rayonnement de l'émetteur d'ordres (3) et du second émetteur (6), et les diagrammes de rayonnement du récepteur d'ordres (5) et du second récepteur (8), sont les mêmes.

6. Système selon la revendication 1, caractérisé par le fait que la puissance d'émission du second émetteur (6) est commandée proportionnellement à la puissance d'émission de l'émetteur d'ordres (3).

7. Système selon la revendication 1, caractérisé par le fait que le second émetteur (6) n'émet le signal "prêt à fonctionner" que dans des intervalles de temps revenant périodiquement.

8. Système selon la revendication 1, caractérisé par le fait que lorsque plusieurs appareils (1) sont associés à la boîte de télécommande, les seconds émetteurs (6) des appareils (1) émettent des signaux "prêt à fonctionner" codés différemment.

9. Système selon la revendication 1, caractérisé par le fait que, le contrôle de réception des signaux "prêt à fonctionner" ne se fait pas en permanence, mais qu'il est provoqué par l'utilisateur qui met en circuit le boîtier de télécommande (2) ou actionne une touche de commande sur le boîtier de télécommande (2).

Fig.1

Fig.2

Fig.3

Fig.4